# EUROPÄISCHE PATENTSCHRIFT

(11) **EP 0 343 319 B1**
(45) Veröffentlichungstag und Bekanntmachung des Hinweises auf die Patenterteilung: **15.06.1994**
(21) Anmeldenummer: 89102404.4
(22) Anmeldetag: 11.02.1989
(51) Int. Cl.: H04L 12/28, H04L 12/54

(54) **Verfahren zur digitalen Informations-übertragung für Kommunikations-Vermittlungssysteme**
Digital-information transmission method for communication-switching systems
Procédé de transmission d'informations numériques pour systèmes de commutation de communications

(30) Priorität: 21.05.1988 DE 3817407
(43) Veröffentlichungstag der Anmeldung: 29.11.1989
(73) Patentinhaber: TELENORMA GMBH, 60326 Frankfurt am Main (DE)
(72) Erfinder: Bleichrodt, Manfred, Dipl.-Ing., D-6108 Weiterstadt (DE); Pohlit, Reinhard, Dipl.-Ing., D-6000 Frankfurt/Main 71 (DE); Pohle, Ulrich, Dipl.-Ing., D-6234 Hattersheim 2 (DE)

(56) Entgegenhaltungen:
- EP-A- 0 115 658
- EP-A- 0 115 883
- DE-A- 3 304 823
- GLOBAL TELECOMMUNICATIONS CONFERENCE 1987 November 1978, IEEE, New York (US), Seiten 1449-1454; N. Fujimoto et al.: "Broadband subscriber loop system using multi-gigabit intelligent optical shuttle nodes"

## Beschreibung

Die Erfindung betrifft ein Verfahren zur digitalen Informationsübertragung für Kommunikations-Vermittlungssysteme nach dem Oberbegriff des Patentanspruches 1.

Aus der DE-OS 28 20 428 ist eine Anlage für ein Zeitmultiplex-Nachrichtensystem mit einem Leitungsnetz in Ringstruktur bekannt. Diese Ringstruktur besteht aus einer Kopfstelle und mehreren Anschlußstellen mit Teilnehmerstationen sowie aus parallel verlaufenden Ringleitungen mit entgegengesetzten Übertragungsrichtungen. Eine derartige Anordnung von Ringleitungen hat den Zweck, im Falle einer Leitungsunterbrechung den Betrieb weiter aufrechterhalten zu können. Davon ausgehend wird in dieser Schrift ausschließlich beschrieben, auf welche Weise bei einer Leitungsunterbrechung erreicht wird, daß Erkennungs- Umschalt- und Reparaturzeiten möglichst kurz sind, so daß ein Kabelbruch keine Beeinträchtigung des Betriebs verursacht. Es wird in diesem Zusammenhang nichts darüber ausgesagt, auf welche Art die Informationsübertragung auf dem Leitungsnetz in Ringstruktur stattfindet.

In der Ntz, Band 40, 1987, Heft 8, ist ab Seite 572 unter der Rubrik Vermittlungstechnik ein Aufsatz mit dem Titel: " Asynchrone Zeitvielfachübermittlung für Breitbandnetze" abgedruckt. Es wird dabei davon ausgegangen, daß möglichst nahe bei den Endgeräten eine Paketisierung der zu übertragenden Information stattfindet, die dann einem Koppelfeld zugeführt wird, wie dies in Bild 1 auf Seite 573 angedeutet ist. Die einzelnen Datenpakete enthalten Kennungen, damit eine Zieladresse erkannt werden kann. Es ist weiterhin in diesem Aufsatz angegeben, daß für die Weitergabe von paketisierten Daten Ringsysteme geeignet sein können, wie dies in Bild 3 auf Seite 575 dargestellt ist. Dabei ist jedoch nur die Ringstruktur als solche erwähnt, ohne daß Angaben über die Einzelheiten des Informationstransports erwähnt werden. In Spalte 2 auf Seite 572 ist davon die Rede, daß es verschiedene Arten von asynchroner Zeitvielfachübermittlung (AZÜ) geben kann.

Die Aufgabe der vorliegenden Erfindung besteht darin, ein Verfahren zur digitalen Informationsübertragung für Kommunikations- Vermittlungssysteme vorzustellen, womit auf in Ringstruktur ausgeführten Übertragungsleitungen Informationen von unterschiedlichen digitalen Vermittlungskategorien übertragen werden können. Dabei sollen neben leitungsbezogen, bzw. verbindungsbezogen durchgeschalteten synchronen Informationen und einer asynchronen Vermittlung von in Paketen variabler Länge verpackten Daten Information in einer dritten Vermittlungskategorie, welche aus asynchron vermittelten Paketen in einheitlicher Länge besteht, durchgeschaltet werden.

Diese Aufgabe wird mit Merkmalen gelöst, wie sie im Patentanspruch 1 angegeben sind.

Damit wird in vorteilhafter Weise erreicht, daß ein für die Übermittlung von synchron zu übertragenden verbindungsbezogenen, bzw. leitungsbezogenen Informationen und für die auf dem gleichen Übertragungsmedium stattfindende asynchronen Vermittlung von in Paketen variabler Länge verpackten Daten festgelegtes Konzept auch dann nicht geändert werden muß, wenn eine weitere dritte Vermittlungskategorie, bestehend aus asynchron vermittelten Paketen einheitlicher Länge über das in Ringstruktur ausgeführte serielle Bussystem zu übertragen ist. Die in den Unteransprüchen angegebenen Weiterbildungen der Erfindung zeigen auf, auf welche Weise das Verfahren weiter optimiert werden kann und an betriebliche Gegebenheiten anpassungsfähig ist.

Ein Ausführungsbeispiel der Erfindung wird nachfolgend anhand von Zeichnungen näher erläutert.

Es zeigt:
- Fig. 1: das Prinzip eines in Ringstruktur angeordneten seriellen Bussystems,
- Fig. 2: eine Übersicht über die in einem Pulsrahmen zu übertragenden Kanäle.

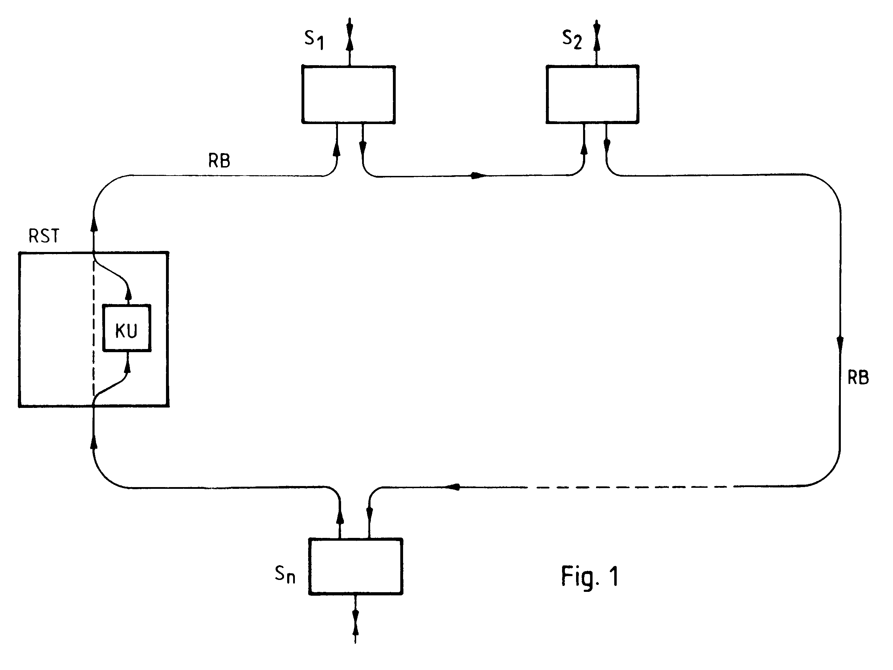

Die Fig. 1 zeigt eine vereinfachte Darstellung eines seriellen Ringbus RB, der an alle in Reihe geschalteten sendenden und empfangenden Stationen S1 bis Sn herangeführt ist. Außerdem ist eine zentrale Ringsteuerung RST vorgesehen, die ebenso wie die einzelnen Stationen S1 bis Sn mit dem Ringbus RB verbunden ist. Der Ringbus RB könnte selbstverständlich auch als Doppelring ausgeführt sein, wie dies in der DE-OS 28 20 428 angegeben ist. An dieser Stelle soll jedoch nicht auf Maßnahmen eingegangen werden, welche bei einer Leitungsunterbrechung durchgeführt werden können, um einen Betrieb aufrechtzuerhalten.

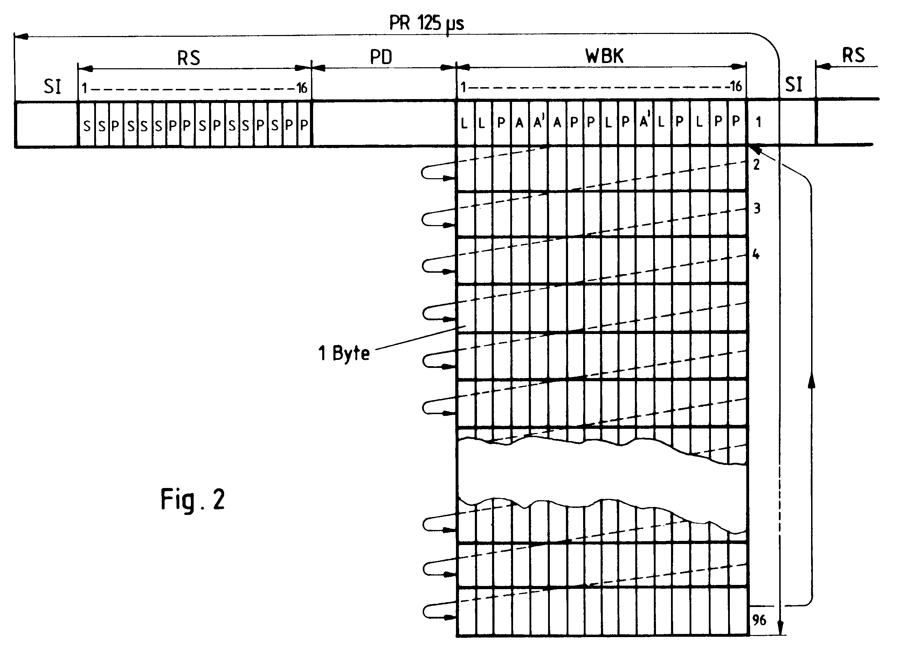

Innerhalb der Ringsteuerung RST ist ein Kanalumsetzer KU vorgesehen, womit es möglich ist, alle in einem vorbestimmten Kanal gesendeten Informationen auf einen anderen Kanal umzusetzen, der dann ausschließlich als Empfangskanal dient. Die Einzelheiten hierzu werden anhand der Fig. 2 später beschrieben.

In der Fig. 2 ist dargestellt, wie ein Pulsrahmen PR mit einer Dauer von beispielsweise 125 »s aufgeteilt ist. Jeder Pulsrahmen beginnt mit einer Startinformation SI, welche mehrere Symbole enthält. Daraus kann der Beginn eines Pulsrahmens erkannt und eine Synchronisierungsinformation abgeleitet werden. Anschließend an die Startinformation folgt eine sogenannte Rahmenschablone RS, welche aus 16 Bits besteht und die Belegung der am Ende des Pulsrahmens folgenden Weitbandkanäle WBK beschreibt. Jedes einzelne Bit gibt also an, auf welche Weise der zugehörige Weitbandkanal WBK genutzt ist. Diese Rahmenschablone wird von der Ringsteuerung RST erstellt und bei allen Veränderungen der vermittlungstechnischen Gegebenheiten sofort auf den neuesten Stand gebracht.

Anschließend an die Rahmenschablone RS folgt eine für das Senden von Paketdaten PD freigehaltene Zeit, worin auf Token-Basis asynchrone Paketdaten PD unabhängig von der Belegung der Weitbandkanäle WBK gesendet werden können. In diesem Zeitabschnitt können also paketierte Daten zwischen den einzelnen Stationen S1 bis Sn auch dann noch ausgetauscht werden, wenn alle Weitbandkanäle WBK belegt sind.

Der Rest des Pulsrahmens PR ist in 16 Weitbandkanäle WBK aufgeteilt. Jeder einzelne Kanal hat eine Kapazität von 96 Bytes,also 768 Bits, so daß sich bei einer Wiederholungsfrequenz von 8 kHz eine Übertragungsgeschwindigkeit von 6,144 M Bit/s pro Kanal ergibt.

Wie die einzelnen Weitbandkanäle WBK genutzt werden, wird von der Ringsteuerung RST entsprechend dem Verkehrsaufkommen und den vermittlungstechnischen Gegebenheiten festgelegt. Von einem Standardisierungsgremium ist festgelegt worden, daß die 16 Weitbandkanäle WBK sowohl für synchron zu übertragende Information als auch für Paketdaten genutzt werden kann. Bei der synchron zu übertragenden Information handelt es sich um verbindungsbezogene, bzw. leitungsbezogene Informationen, beispielsweise um Sprache, die nach dem PCM-Verfahren übertragen wird. Bei den Paketdaten handelt es sich um asynchron übertragbare Pakete variabler Länge, wobei die Information von einer Station, welche die Sendeerlaubnis hat, so lange gesendet wird, bis die gesamte Information abgegeben worden ist. Entsprechend dieser Festlegung wird von der Ringsteuerung in der in jedem Pulsrahmen PR erscheinenden Rahmenschablone RS angegeben, welche Weitbandkanäle WBK für synchron zu übertragende verbindungs- bzw. leitungsbezogene Informationen genutzt werden soll, und welche andere Weitbandkanäle WBK für Paketdaten zur Verfügung stehen. In der Fig. 2 sind dementsprechend einige der Bytes in der Rahmenschablone RS mit S für synchron und andere Bytes mit P für Paket bezeichnet.

Unter der Rubrik Weitbandkanäle WBK ist in der Fig. 2 ersichtlich, daß dort die gleichen Positionen mit P bezeichnet sind, welche in der Rahmenschablone den Buchstaben P tragen. Damit ist festgelegt, daß in diesen Weitbandkanälen WBK ausschließlich asynchron zu vermittelnde Pakete P mit variabler Länge übertragen werden.

Bei den in der Rahmenschablone RS mit S bezeichneten Positionen verhält es sich erfindungsgemäß anders. Hier ist vorgesehen, daß ein Teil der für die synchrone Übertragung von Information vorgesehenen Weitbandkanäle WBK für asynchron zu vermittelnde Pakete einheitlicher Länge genutzt werden können. Diese Vermittlungsart wird auch mit ATD (Asynchronous Time Division) bezeichnet. Demzufolge sind in der Rubrik Weitbandkanäle WBK einige der Kanäle mit A bezeichnet, während der Rest, welcher für verbindungs- bzw. leitungsbezogene Vermittlung vorgesehen ist, mit L bezeichnet ist.

Um den einzelnen Stationen S1 bis Sn mitzuteilen, welche der in der Rahmenschablone RS mit S bezeichneten Kanäle für die asynchrone Übertragung von Paketen einheitlicher Länge vorgesehen sind, wird von der Ringsteuerung RST eine paketierte Information ausgesendet, welche entweder in einem für Pakete P ausgewiesenen Weitbandkanal WBK oder in dem für Paketdaten PD ausgewiesenen Zeitraum an die Stationen S1 bis Sn gesendet wird. Durch eine im Paket enthaltene globale Adressierung kann diese Information von allen Stationen S1 bis Sn empfangen werden, welche für das Senden und Empfangen von asynchron vermittelten Paketen in einheitlicher Länge (ATD) eingerichtet sind. Alle Stationen S1 bis Sn, welche verbindungs- bzw. leitungsbezogene synchron vermittelte Information senden und empfangen, bekommen ohnehin von der Ringsteuerung mitgeteilt, welche Zeitschlitze in welchen Weitbandkanälen WBK für jede einzelne Verbindung festgelegt sind. Diese einzelnen Zeitschlitze müssen nämlich im nächsten Pulsrahmen PR zeitlich genau an dergleichen Stelle für dieselbe Verbindung zur Verfügung stehen.

Im folgenden wird beschrieben, wie beim Senden und Empfangen von Paketinformation, insbesondere bei Paketen mit einheitlicher Länge der Vermittlungskategorie A verfahren wird. Solche Paketinformation kann nur dann gesendet werden, wenn ein dafür vorgesehener Weitbandkanal WBK, welcher in Fig. 2 mit A bezeichnet ist, als frei gekennzeichnet ist. Eine Station, z. B. S1 muß dann noch durch "Abhören" des Ringbus RB feststellen, an welcher Stelle innerhalb des Weitbandkanales WBK ein Paketplatz frei ist, so daß dann mit dem Senden eines Paketes begonnen werden kann. Jedes Paket enthält zu Beginn eine Adresse, dies gilt auch für Pakete der Kategorie P, so daß die Information von einer vorbestimmten Station, z. B. Sn, empfangen werden kann. Es ist jedoch auch möglich, daß Paketinformationen an mehrere Stationen gesendet werden können, welche dann bei einer globalen Adressierung in der Lage sind, die betreffende Paketinformation zu empfangen. Wenn ein Paket mit einheitlicher Länge empfangen worden ist, so wird dies an der Anzahl von Bytes,z. B. 32, erkannt. Die empfangende Station, z. B. Sn, muß dann den Paketplatz innerhalb des Weitbandkanales WBK wieder als frei kennzeichnen. Dieser Paketplatz kann dann von einer der folgenden Stationen oder auch im nächsten Pulsrahmen PR neu belegt werden. Bei Paketeinheiten mit globaler Adressierung muß die sendende Station, z. B. S2, dafür sorgen, daß der betreffende Paketplatz spätestens dann wieder frei wird, wenn die Information einmal den gesamten Ringbus RB durchlaufen hat. Wenn also eine sendende Station, z. B. S2, erkennt, daß ein von ihr gesendetes Paket der Kategorie A wieder empfangen wird, so muß an dieser Stelle ein Freikennzeichen ausgesendet werden.

Falls aus irgendwelchen Gründen dieses Schema nicht eingehalten werden kann, weil beispielsweise Störungen vorliegen, so bleiben derartige Informationen auf dem Ringbus RB erhalten, so daß die betreffenden Weitbandkanäle WBK bzw. die Paketplätze darin nicht mehr frei werden.

Dies kann dazu führen, daß der Ringbus RB allmählich zuwächst, so daß keine neuen Informationen mehr übertragen werden.

Um zu verhindern, daß beim Senden von Paketen einheitlicher Länge der Vermittlungskategorie A Kanäle, wie zuvor geschildert worden ist, besetzt bleiben, kann in der Ringsteuereinrichtung RST auch als Alternative ein Kanalumsetzer KU vorgesehen werden. In diesem Fall wird von der Ringsteuerung RST zu jedem für das Senden von Paketen der Vermittlungskategorie A ausgewiesenen Weitbandkanal WBK im gleichen Pulsrahmen ein zweiter Weitbandkanal WBK reserviert, welcher ausschließlich für den Empfang von Paketen mit einheitlicher Länge der Vermittlungskategorie A vorgesehen ist und in Fig. 2 mit A′ bezeichnet ist. Bei dieser Verfahrensweise ist selbstverständlich die Bandbreite für die Vermittlungskategorie A auf die Hälfte reduziert. Vom Kanalumsetzer KU werden sämtliche innerhalb eines mit A bezeichneten Weitbandkanales WBK gesendeten Pakete auf einen im gleichen Pulsrahmen PR folgenden, mit A′ bezeichneten Weitbandkanal WBK umgesetzt, welcher ausschließlich für das Empfangen von Paketen einheitlicher Länge der Vermittlungskategorie A vorgesehen ist. Bei dieser Verfahrensweise ergibt sich automatisch, daß in einem Weitbandkanal WBK mit der Bezeichnung A gesendete Information auf den nachfolgenden, mit A′ bezeichneten Weitbandkanal WBK gelangt, wobei die betreffenden Weitbandkanäle WBK, welche mit A oder mit A′ bezeichnet sind, automatisch frei werden, wenn die gesendeten bzw. die zu empfangenden Pakete erneut an der Ringsteuerung RST ankommen. Bei einer Kanalumsetzung ist es also nicht unbedingt erforderlich, daß die einzelnen Stationen S1 bis Sn selbst dafür sorgen, daß die betreffenden Weitbandkanäle WBK, bzw. die Paketplätze darin wieder frei werden.

Es kann außerdem vorgesehen werden, daß die zentrale Ringsteuerung RST Kontrollpakete zu den Stationen sendet, um zu erkennen, ob diese richtig reagieren. Wenn ein derartiges Kontrollpaket unverändert wieder an der Ringsteuerung ankommt, so kann anhand der darin enthaltenen Adresse erkannt werden, welche der Stationen S1 bis Sn fehlerhaft ist. Die Adressen solcher fehlerhaft reagierenden Stationen können gespeichert werden, so daß die Ringsteuerung RST in der Lage ist, an fehlerhaft reagierende Stationen S1 bis Sn adressierte Pakete zu eliminieren. Ebenso kann verfahren werden, wenn die zentrale Ringsteuerung RST in einem Paket eine Adresse feststellt, welche nicht durch eine vorhandene Station S1 bis Sn abgedeckt ist. Die Ringsteuerung RST kann außerdem generell überwachen, ob Pakete zweimal den Ringbus RB durchlaufen. In einem solchen Fall kann ebenfalls der betreffende Weitbandkanal, bzw. der darin enthaltene Paketplatz frei gemacht werden.

Die zuvor beschriebenen Maßnahmen gelten zum Teil auch für Pakete der Vermittlungskategorie P, wobei jedoch die Kanalumsetzung dafür nicht vorgesehen werden kann, weil die Pakete der Vermittlungskategorie P, welche asynchron gesendet werden, und eine variable Länge haben, in einem Weitbandkanal WBK beginnen und in einem anderen folgenden Weitbandkanal WBK fortgesetzt werden können. Bei Pakete mit einheitlicher Länge der Vermittlungskategorie A ist es grundsätzlich so, daß die Pakete nicht den Rahmen eines Weitbandkanales WBK überschreiten. Bei einer angenommenen einheitlichen Paketgröße von 32 Bytes für die Vermittlungskategorie A und einer Kapazität von 96 Bytes pro Weitbandkanal WBK lassen sich also genau drei Pakte der Vermittlungskategorie A in einem Weitbandkanal WBK versenden. Ein derart belegter Weitbandkanal A wird dann beim Einsatz eines Kanalumsetzers KU komplett auf einen folgenden Weitbandkanal WBK, welcher mit A′ bezeichnet ist, umgesetzt.

## Patentansprüche

1. Verfahren zur digitalen Informationsübertragung für Kommunikations-Vermittlungssysteme, wobei als Übertragungsmedium ein in Ringstruktur ausgeführter serieller Bus angewendet wird, woran mehrere Sende-und Empfangsstationen in Reihe geschaltet angeschlossen sind und Informationen unterschiedlicher Vermittlungskategorien auf demselben seriellen Bus übertragen werden, wobei sogenannte Weitband-Kanäle gebildet werden, die jeweils entweder für eine verbindungsbezogene, bzw. leitungsbezogene synchrone Kanalzuteilung reserviert werden oder für die asynchrone Vermittlung von in Paketen variabler Länge verpackte Daten zur Verfügung gestellt werden,
dadurch gekennzeichnet,
daß eine dritte Vermittlungskategorie (A) bestehend aus asynchron vermittelten Paketen einheitlicher Länge über den seriellen Ringbus (RB) durchgeschaltet wird, indem ein Teil der für die synchrone Durchschalteart (S) reservierten, aber noch nicht benutzten Weitbandkanäle (WBK) dafür belegt werden, wobei allen die dritte Vermittlungskategorie (A) sendenden und empfangenden Stationen durch Übertragung von Signalisierungsdaten mitgeteilt wird, in welchen der Weitband-Kanälen (WBK) Information der dritten Vermittlungskategorie (A) übertragen werden kann.

2. Verfahren nach Anspruch 1,
dadurch gekennzeichnet,
daß von einer zentralen Ringsteuerung (RST) Kennzeichen für freie Weitband-Kanäle (WBK) erzeugt werden, welche für asynchron zu vermittelnde Pakete der dritten Vermittlungskategorie (A) belegt werden können, und daß die Freikennzeichen bei Bedarf von einer sendenden Station (S1 bis Sn) in Belegtkennzeichen umgewandelt werden.

3. Verfahren nach Anspruch 2,
dadurch gekennzeichnet,
daß eine durch ihre in einem Paket enthaltene Adresse angesprochene, empfangende Station (S1 bis Sn) die betreffenden Kanäle, welche für die dritte Vermittlungskategorie (A) reserviert sind, nach dem Empfang mit einem Freikennzeichen versehen kann oder für zu sendende Information neu belegen kann.

4. Verfahren nach Anspruch 3,
dadurch gekennzeichnet,
daß bei durch globale Adressierung an mehrere Stationen (S1 bis Sn) gerichtete Paketeinheiten von der jeweils sendenden Station (z. B. S1) die betreffenden Kanäle wieder als frei gekennzeichnet werden, wenn die gesendeten Pakete wieder empfangen werden.

5. Verfahren nach Anspruch 1,
dadurch gekennzeichnet,
daß eine zentrale Ringsteuerung (RST) Kontrollpakete der ersten Vermittlungskategorie (A) zu den Stationen (S1 bis Sn) sendet, um fehlerhafte Stationen (S1 bis Sn) daran zu erkennen, daß die Pakete unverändert wieder ankommen, und daß die Adressen fehlerhafter Stationen (S1 bis Sn) in der zentralen Ringsteuerung (RST) gespeichert werden, worauf beim Durchlauf von an solche Stationen (S1 bis Sn) gerichtete Pakete automatisch vom Ringbus (RB) entfernt werden.

6. Verfahren nach Anspruch 5,
dadurch gekennzeichnet,
daß die zentrale Ringsteuerung (RST) Pakete mit einer nicht existierenden Adresse vom Ring entfernt und ein Freikennzeichen in die entsprechenden Kanäle einspeist.

7. Verfahren nach Anspruch 5,
dadurch gekennzeichnet,
daß bei durch globale Adressierung an mehrere Stationen (S1 bis Sn) gerichteten Paketeinheiten von der zentralen Ringsteuerung (RST) die betreffenden Kanäle wieder als frei gekennzeichnet werden, wenn die gesendeten Pakete zum zweiten Mal unverändert wieder bei der zentralen Ringsteuerung (RST) erscheinen.

8. Verfahren nach Anspruch 1,
dadurch gekennzeichnet,
daß in einer Ringsteuerung (RST) ein Kanalumsetzer (KU) vorgesehen ist, der die auf einem für die dritte Vermittlungskategorie (A) belegten Weitbandkanal (WBK-A) gesendeten Informationen auf einen zusätzlich belegten, zugehörigen, ausschließlich für das Empfangen von Informationen der dritten Vermittlungskategorie (A) vorgesehenen Weitband-Kanal (WBK-A′) umsetzt.

## Claims

1. Method for the digital information transmission for communications exchange systems, wherein a serial bus, which is constructed in ring structure and connected to several transmitting and receiving stations which are connected in series, is used as transmission medium and information signals of different exchange categories are transmitted on the same serial bus, wherein so-called wide band channels are formed, which are each reserved respectively for either a connection-related or a line-related synchronous channel allocation or put at disposal for the asynchronous exchange of data packed into packets of variable length, characterised thereby, that a third exchange category (A) consisting of asynchronously exchanged packets of uniform length is switched through by way of the serial ring bus (RB) in that a part of the wideband channels (WBK), which have been reserved, but not yet used for the synchronous connecting-through mode (S), are seized for this, wherein all the stations transmitting and receiving the third exchange category (A) are informed by the transmission of signalling data in which of the wideband channels (WBK) information signals of the third exchange category (A) can be transmitted.

2. Method according to claim 1, characterised thereby, that marking signals for free wideband channels (WBK), which can be seized for packets of the third exchange category (A), which are to be exchanged asynchronously, are produced by a central ring control (RST) and that the free-marking signals are converted into engaged-marking signals by a transmitting station (S1 to Sn) in case of need.

3. Method according to claim 2, characterised thereby, that a receiving station (S1 to Sn), which is addressed by its address being contained in a packet, can after the reception provide the channels concerned, which are reserved for the third exchange category (A), with a free-marking signal or seize them anew for information signals to be transmitted.

4. Method according to claim 3, characterised thereby, that in the case of packet units, which are directed by global addressing to several stations (S1 to Sn), the channels concerned are again marked as clear by the respective transmitting station (e.g. S1) when the transmitted packets have been received again.

5. Method according to claim 1, characterised thereby, that a central ring control (RST) transmits check packets of the first exchange category (A) to the stations (S1 to Sn) in order to recognise faulty stations (S1 to Sn) from the packets returning unchanged again and that the addresses of faulty stations (S1 to Sn) are stored in the central ring control (RST), whereupon packets directed to such stations (S1 to Sn) are removed automatically from the ring bus (RB) on passing therethrough.

6. Method according to claim 5, characterised thereby, that the central ring control (RST) removes packets with a non-existent address from the ring and feeds a free-marking signal into the corresponding channels.

7. Method according to claim 5, characterised thereby, that in the case of packet units, which are directed by global addressing to several stations (S1 to Sn), the channels concerned are again marked as clear by the central ring control (RST) when the transmitted packets appear at the central ring control (RST) again unchanged for the second time.

8. Method according to claim 1, characterised thereby, that a channel transposer (KU), which transposes the information signals transmitted on a wideband channel (WBK-A) seized for the third exchange category (A) to an additionally seized associated wideband channel (WBK-A') provided exclusively for the reception of information signals of the third exchange category (A), is provided in a ring control (RST).

## Revendications

1. Procédé pour la transmission d'informations numériques pour des systèmes de commutation de communications, selon lequel on utilise comme milieu de transmission un bus série réalisé selon une structure en anneau et auquel sont raccordés en série plusieurs postes d'émission et de réception, et des informations de différentes catégories de commutation sont transmises dans le même bus série, et ce qu'on appelle des canaux à large bande sont formés, canaux qui sont réservés respectivement pour une affectation synchrone de canaux associée à une liaison ou à une ligne, ou bien sont disponibles pour la commutation asynchrone de données réunies sous la forme de paquets de longueur variable, caractérisé par le fait
qu'une troisième catégorie de commutation (A) constituée par des paquets commutés de façon asynchrone et possédant une longueur uniforme est transférée par l'intermédiaire du bus en anneau en série (RB), par le fait qu'une partie des canaux à large bande (WBK), qui sont réservés pour le type d'interconnexion synchrone (S) mais ne sont pas encore utilisés, sont occupés à cet effet, tous les postes émettant et recevant la troisième catégorie de commutation (A) recevant par l'intermédiaire de la transmission de données de signalisation, l'indication de ceux des canaux à large bande (WBK), dans lesquels une information de la troisième catégorie de commutation (A) peut être transmise.

2. Procédé selon la revendication 1, caractérisé en ce que des signaux caractéristiques sont produits par un dispositif central de commande en anneau (RST) pour des canaux libres à large bande (WBK), qui peuvent être occupes pour des paquets, qui doivent être commutés de façon asynchrone, de la troisième catégorie de commutation (A), et que les signaux caractéristiques d'état libre sont convertis le cas échéant par un poste émetteur (S1 à Sn) en des signaux caractéristiques d'état occupé.

3. Procédé selon la revendication 2, caractérisé en ce qu'un poste récepteur (S1 à Sn), qui répond au moyen de son adresse contenue dans un paquet, peut, après la réception, équiper de signaux caractéristiques d'état libre les canaux concernés, qui sont réservés pour la troisième catégorie de commutation (A) ou peut occuper à nouveau lesdits canaux pour une information devant être émise.

4. Procédé selon la revendication 3, caractérisé en ce que, dans le cas d'unités de paquets dirigées au moyen d'un adressage global à plusieurs postes (S1 à Sn) à partir du poste (par exemple S1), qui émet respectivement, les canaux concernés sont à nouveau caractérisés comme étant libres, lorsque les paquets émis sont à nouveau reçus.

5. Procédé selon la revendication 2, caractérisé en ce qu'un dispositif central de commande en anneau (RST) émet des paquets de contrôle à partir de la première catégorie de commutation (A) aux postes (S1 à Sn), de manière à identifier des postes défectueux (S1 à Sn) au fait que les paquets reviennent sans modification, et que les adresses de postes défectueux (S1 à Sn) sont mémorisées dans le dispositif central de commande en anneau (RST), à la suite de quoi des paquets dirigés lors de la circulation à partir de tels postes (S1 à Sn) sont retirés automatiquement du bus en anneau (R2).

6. Procédé selon la revendication 5, caractérisé en ce que le dispositif central de commande en anneau (RS) retire des paquets possédant une adresse n'existant pas, de l'anneau et introduit un signal caractéristique d'état libre dans les canaux correspondants.

7. Procédé selon la revendication 5, caractérisé en ce que dans le cas d'unités de paquets dirigés au moyen d'un adressage global à plusieurs postes (S1 à Sn), les canaux concernés sont caractérisés par le dispositif central de commande d'anneau (RST) comme étant à nouveau libres, lorsque les paquets émis apparaissent à nouveau pour la seconde fois, en étant inchangés, dans le dispositif central de commande d'anneau (RST).

8. Procédé selon la revendication 1, caractérisé en ce que dans un dispositif de commande d'anneau (RST), il est prévu un convertisseur de canaux (KU), qui transfère les informations, émises dans un canal à large bande (WBK-A) occupé par la troisième catégorie de commutation (A), dans un canal associé à large bande (WBK-A'), occupé de façon supplémentaire et prévu exclusivement pour la réception d'informations de la troisième catégorie de commutation (A).
